# EUROPÄISCHE PATENTSCHRIFT

(11) **EP 1 470 519 B1**
(45) Veröffentlichungstag und Bekanntmachung des Hinweises auf die Patenterteilung: **24.08.2005**
(21) Anmeldenummer: 03702438.7
(22) Anmeldetag: 15.01.2003
(51) Int. Cl.: G06K 7/00

(54) **VERFAHREN ZUR AUSWAHL VON TRANSPONDERN**
METHOD FOR SELECTING TRANSPONDERS
PROCEDE DE SELECTION DE TRANSPONDEURS

(30) Priorität: 01.02.2002 DE 10204346
(43) Veröffentlichungstag der Anmeldung: 27.10.2004
(73) Patentinhaber: ATMEL Germany GmbH, 74072 Heilbronn (DE)
(72) Erfinder: FRIEDRICH, Ulrich, 74248 Ellhofen (DE)
(86) Internationale Anmeldenummer: PCT/EP2003/000324
(87) Internationale Veröffentlichungsnummer: WO 2003/065285

(56) Entgegenhaltungen:
- FR-A- 2 805 637
- GB-A- 2 340 692
- US-A- 5 856 788

## Beschreibung

Die vorliegende Erfindung betrifft ein Verfahren zur Auswahl von Transpondern, gemäß dem Oberbegriff des Patentanspruchs 1.

Ein derartiges Verfahren ist aus der Druckschrift US 5 856 788 bekannt. Hierbei werden mittels eines Auswahlverfahrens, das in einem sogenannten Halbduplex Betrieb arbeitet, die Transponder identifiziert, die sich im HF - Feld einer Basisstation befinden. Nachteilig dabei ist, daß durch das Halbduplexverfahren viel Zeit benötigt wird. Ein weiterer Nachteil des Verfahrens besteht darin, daß besonders wenn zur Übertragung der Steuerungssignal nur eine geringe HF Bandbreite zur Verfügung steht die Zeitdauer zur Übertragung der Steuerungssignale weiter zunimmt.

Aufgabe der vorliegenden Erfindung ist es, ein Verfahren zur Auswahl von Transpondern anzugeben, das sich mit einem geringem Zeitaufwand durchführen und sich mit wenigen Steuerungssignalen realisieren läßt.

Diese Aufgabe wird erfindungsgemäß durch ein Verfahren der eingangs genannten Art mit den Merkmalen des Patentanspruches 1 gelöst. Günstige Ausgestaltungsformen sind Gegenstand des Unteranspruchs.

Hiernach besteht das Wesen der Erfindung darin, daß eine Basisstation den Transpondern in einem ersten Schritt eine Referenzlänge übersendet die dann in einem folgenden Auswahlverfahren dazu verwendet wird Prüfbits zu ermitteln. Das Auswahlverfahren arbeitet bitweise, so daß bei jedem Bit eine Auswahl getroffen wird ob eine bestimmte Gruppe oder ein einzelner Transponder ausgewählt wird oder ob es sich in einen Stillhaltemodus zurückzieht. Ist eine Gruppe oder ein einzelner Transponder ausgewählt, sendet der oder die Transponder ein Informationssignal. Die Basisstation empfängt diese Informationen und quittiert diese qualitativ indem es eine Information zurücksendet, die dann im Transponder zur Bildung eines Prüfbits verwendet wird. Stimmt das Prüfbit mit der gesendeten Information überein, so ist der Transponder oder die Gruppe der Transponder weiterhin ausgewählt.

Stimmt das Prüfbit nicht mit der gesendeten Information überein, ziehen sich die oder der Transponder in einen Stillhaltemodus zurück.
Hierzu wird die Auswahl von einem oder mehreren Transpondem aus einer Vielzahl von Transpondem durch eine Basisstation mittels einer elektromagnetischen Welle durchgeführt, wobei auf die elektromagnetische Welle ein Informationspaket (IP) aufmoduliert ist und das Informationspaket (IP) einen Kopfabschnitt (KO) und einen Datenabschnitt (DA) aufweist. Femer enthält der Datenabschnitt (DA) ein Datenwort mit einer Folge von Bits, wobei jeweils in einem aus zwei aufeinanderfolgenden Taktimpulsen erzeugten Zeitintervall ein Bit der Bitfolge zugeordnet wird. Des Weiteren ist jedem Transponder ein als eine Bitfolge ausgebildeter Identifikationscode zugeordnet. Femer sind die Transponder mittels eines Anmeldeprozesses von der Basisstation aufgeweckt, wobei als Ergebnis des Anmeldeprozesses in den Transpondem ein Zeiger auf ein erstes definiertes Bit der Bitfolge des Identifikationscodes zeigt.
Des Weitem wird in einem ersten Schritt im Kopfabschnitt ein von der Basisstation ausgesendeten Informationspakets die Zeitdauer eines Referenzintervalls übertragen.
In einem zweiten Schritt wird die Zeitdauer des Referenzintervalls in jedem Transponder gespeichert und in einem dritten Schritt zu Beginns des Datenabschnitts überträgt jeder Transponder in einem ersten Zeitintervall die Wertigkeit des definierten Bits des Identifikationscodes. In einem vierten Schritt wird in jedem Transponder am Ende des ersten Zeitintervalls ein Vergleich zwischen Zeitdauer des Referenzintervalls und der Zeitdauer des ersten Zeitintervalls durchgeführt und in einem fünften Schritt aus dem Ergebnis des Vergleichs einem Prüfbit eine Wertigkeit zugeordnet. In einem sechsten Schritt vergleichen die Transponder die Wertigkeit des Prüfbits mit der Wertigkeit des im ersten Zeitintervall übertragenen ersten Bits, und die Transponder, bei denen sich die Wertigkeit des ersten Bits der Bitfolge des Identifikationscode von der Wertigkeit des Prüfbits unterscheidet, werden bis zum Beginn eines weiteren Anmeldeprozesses in einen Stillhaltemodus geschaltet.
Femer übertragen die Transponder, bei denen die Wertigkeit des ersten definierten Bits der Bitfolge des Identifikationscode mit der Wertigkeit des Prüfbits übereinstimmt, in einem zweiten Zeitintervall die Wertigkeit des nachfolgenden Bits der Bitfolge ihres Identifikationskodes.

In einer Weiterbildung des Verfahrens wird zur Auswahl weiterer oder zur Auswahl von genau einem Transponder weiteren oder allen Bits der Bitfolge des Identifikationscde verglichen, indem Schritte 4 bis 6 mehrfach durchlaufen werden. Hierbei wird nach jedem Durchlauf die Nummer des Zeitintervalls und die Nummer der Bitstelle des Identifikationscodes um eins erhöht bzw. reduziert.

Ein Vorteil des Verfahrens ist es, daß im Unterschied zu den bisherigen Verfahren von der Basisstation nach jedem Fragesignal an die Transponder kein Antwortsignal übertragen werden muß. Die Auswahl wird bei jeden Durchlauf aus dem Vergleich des Prüfbits mit einem Bit des Identifikationscodes durchgeführt. Auch bei einer vollständigen Auswahlprozedur zur Identifikation aller Transponder ist es hinreichend die Referenzlänge für den Vergleich einmalig in einem Kopfabschnitt eines Informationspaket zu übertragen. Die Auswahl der Wertigkeiten wird von der Basisstation durch die Länge des Zeitintervall mittels der von ihr ausgesendeten elektromagnetischen Welle bestimmt, indem die Basisstation die Zeitdauer zwischen zwei aufeinanderfolgenden Taktimpulsen relativ zur Referenzlänge verringert oder erhöht. Hierbei wird bei jedem von der Basisstation vorgegebenen Zeitintervall ein Bit des Identifikationscodes des Transponders an die Basisstation übertragen. Damit arbeitet das Auswahlverfahren (Verfahren zur Antikollision) im sogenannten Vollduplex Betrieb. Hierdurch wird die Anzahl der Symbole zur Steuerung des Auswahlverfahrens erheblich verringert. Hierdurch wird die Zeit zur Auswahl von Gruppen oder einzelnen Transponder erheblich verringert. Femer läßt sich das Verfahren mit unterschiedlichen Modulationsverfahren wie beispielsweise einer Phasen- und oder einer Amplitudenmodulation durchführen.

Das erfindungsgemäße Verfahren soll nachfolgend anhand der Ausführungsbeispiele im Zusammenhang mit einer schematisierten Zeichnung erläutert werden. Es zeigen, die
Fig. 1a ein Informationspaket, und
Fig. 1b eine hierarchische Arbitration von acht Transpondem , und
Fig. 2a eine Auswahl von dem ersten von insgesamt zwei Transponder, und
Fig. 2b eine Auswahl von dem zweiten von insgesamt zwei Transponder.

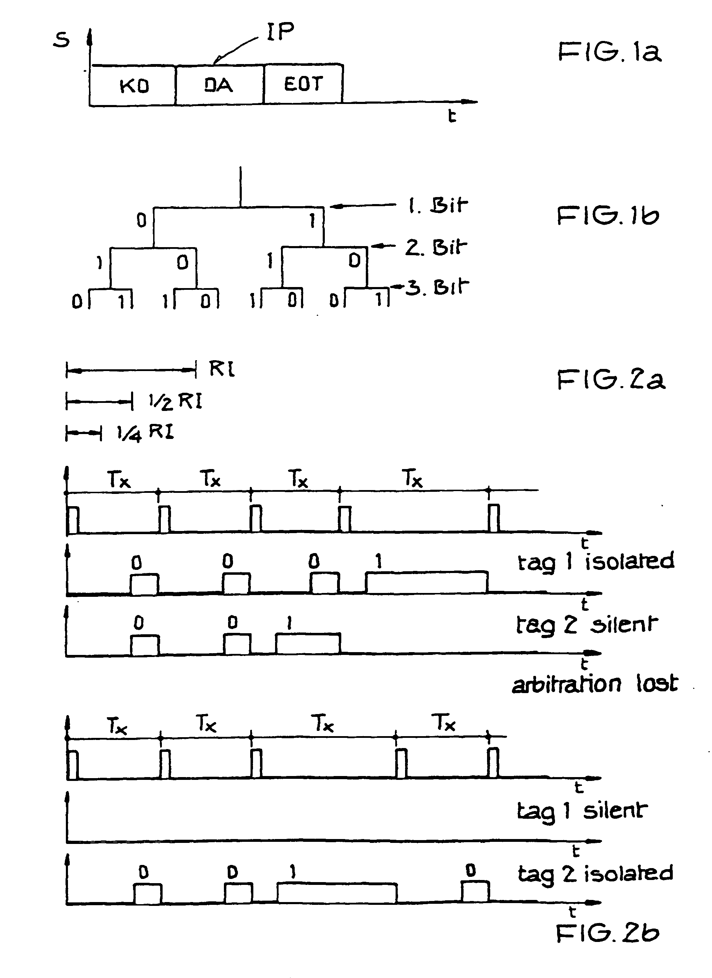

In Figur 1a ist ein Informationspaket IP, bestehend aus einem Kopfabschnitt KO, einem Datenbereich DA und einem EOT-Bereich dargestellt. Mittels eines derartigen Informationspakets IP werden Daten zwischen einem oder mehreren Transpondem und einer Basisstation übertragen. In dem Kopfabschnitt KO des Informationspaketes werden die Anzahl der Symbole und deren Kennung definiert, wobei mit der Kennungen des oder der Datensymbole die zu übertragenden Daten im Datenbereich codiert werden. Des Weiteren lässt sich der Kopfabschnitt KO zur Übermittlung von Kenngrößen verwenden, die beispielsweise die Auswertung des Datenwortes steuern. Des Weiteren wird mit dem EOT-Bereich über eine vorgegebene Kennung dem Empfänger das Ende des Informationspaketes mitgeteilt.

Bevor ein Datenaustausch zwischen einer Basisstation und einem oder mehreren Transpondem durchgeführt wird, muß durch eine Identifikation bzw. Auswahl der Transponder Identifikationscode aller Transponder, die sich im Feld der Basisstation befinden, der Basisstation übermittelt werden. Dieses Verfahren wird auch als Antikollision bezeichnet und wird bevorzugt streng hierarchisch durchgeführt.
In der Fig. 1b ist ein Identifikationscode für maximal 8 Transponder dargestellt. Um einen der acht Transponder anzusprechen sind insgesamt drei Bitebenen zu durchlaufen.

In der Fig. 2a ist eine Auswahl von einem ersten Transponder bei insgesamt zwei Transpondern dargestellt. Nachdem die Transponder in einem Anmeldeprozess ihre Anwesenheit der Basisstation mitteilten, wird von der Basisstation in dem Kopfabschnitt in einem nachfolgenden Informationspaket die Dauer des Referenzintervalls RI mitgeteilt. Femer wird in dem Kopfabschnitt für die Wertigkeit der Datenbits bezogen auf die Länge des Referenzintervall RI den beiden Transpondern für die logische Eins der Wert ½ und für die logische Null der Wert ¼ mitgeteilt. Im dem Kopfabschnitt nachfolgenden Datenabschnitt teilen beide Transponder im ersten Zeitintervall Tx den Wert der ersten Bitstelle ihres Identifikationscodes mit. Am Ende des ersten Zeitintervalls Tx vergleichen beide Transponder die Länge des Zeitintervalls mit der Länge des Refernzintervalls RI.

## Patentansprüche

1. Verfahren zur Auswahl von einem oder mehreren Transpondem aus einer Vielzahl von Transpondem durch eine Basisstation (BS) mittels einer elektromagnetischen Welle, wobei
• auf die elektromagnetische Welle ein Informationspaket (IP) aufmoduliert ist und das Informationspaket (IP) einen Kopfabschnitt (KO) und einen Datenabschnitt (DA) aufweist, und
• der Datenabschnitt (DA) ein Datenwort mit einer Folge von Bits enthält, wobei jeweils in einem aus zwei aufeinanderfolgenden Taktimpulsen erzeugten Zeitintervall (TX) ein Bit der Bitfolge zugeordnet wird, und
• jedem Transponder ein als eine Bitfolge ausgebildeter Identifikationscode zugeordnet ist, und
• die Transponder mittels eines Anmeldeprozesses von der Basisstation aufgeweckt sind, und als Ergebnis des Anmeldeprozesses in den Transpondem ein Zeiger auf ein erstes Bit der Bitfolge des Identifikationscodes zeigt,
**dadurch gekennzeichnet, daß**
• in einem ersten Schritt im Kopfabschnitt (KO) ein von der Basisstation ausgesendeten Informationspakets (IP) die Zeitdauer eines Referenzintervalls (RI) übertragen wird,
• in einem zweiten Schritt der Zeitdauer des Referenzintervalls (RI) in jedem Transponder gespeichert wird,
• in einem dritten Schritt zu Beginns des Datenabschnitts (DA) in einem ersten Zeitintervall (TX) jeder Transponder die Wertigkeit des ersten Bits des Identifikationscodes überträgt,
• in einem vierten Schritt in jedem Transponder am Ende des ersten Zeitintervalls (TX) ein Vergleich zwischen Zeitdauer des Referenzintervalls (RI) und der Zeitdauer des ersten Zeitintervalls (TX) durchgeführt wird,
• in einem fünften Schritt aus dem Ergebnis des Vergleichs einem Prüfbit eine Wertigkeit zugeordnet wird,
• in einem sechsten Schritt die Transponder die Wertigkeit des Prüfbits mit der Wertigkeit des im ersten Zeitinterval (TX) übertragenen ersten Bits vergleichen und
• die Transponder, bei denen sich die Wertigkeit des ersten Bits der Bitfolge des Identifikationscode von der Wertigkeit des Prüfbits unterscheidet, bis zum Beginn eines weiteren Anmeldeprozesses in einen Stillhaltemodus geschaltet werden, und
• die Transponder, bei denen die Wertigkeit des ersten Bits der Bitfolge des Identifikationscode mit der Wertigkeit des Prüfbits übereinstimmt, in einem zweiten Zeitintervall (TX) die Wertigkeit des zweiten Bits der Bitfolge ihres Identifikationskodes übertragen.

2. Verfahren nach Anspruch 1, **dadurch gekennzeichnet, dass** weitere Transponder oder genau ein Transponder durch einen Vergleich von weiteren oder allen Bits der Bitfolge des Identifikationscde ausgewählt werden, indem die Schritte 4 bis 6 mehrfach durchlaufen werden und nach jedem Durchlauf die Nummer des Zeitintervalls (TX) und die Nummer der Bitstelle des Identifikationscodes um eins erhöht wird.

## Claims

1. Method of selecting one or more transponders from a plurality of transponders by a base station (BS) by means of an electromagnetic wave, wherein
- an information packet (IP) is modulated on the electromagnetic wave and the information packet (1) comprises a head section (KO) and a data section (DA) and
- the data section (DA) contains a data word with a sequence of bits, wherein a bit of the bit sequence is assigned in each instance in a time interval (TX) produced from two successive timing pulses and
- an identification code formed as a bit sequence is assigned to each transponder and
- the transponders are awakened by means of a reporting process by the base station and as a result of the reporting process a pointer points, in the transponders, to a first bit of the bit sequence of the identification code,
**characterised in that**
- in a first step the time duration of a reference interval (RI) is transmitted by the base station in the head section (KA) of an information packet (IP),
- in a second step the time duration of the reference interval (RI) is stored in each transponder,
- in a third step the valency of the first bit of the identification code is transmitted to each transponder at the beginning of the data section (DA) in a first time interval (TX),
- in a fourth step a comparison is carried out in each transponder at the end of the first time interval (TX) between the time duration of the reference interval (RI) and the time duration of the first time interval (TX),
- in a fifth step from the result of the comparison a valency is assigned to a check bit,
- in a sixth step the transponders compare the valency of the check bit with the valency of the first bit transmitted in the first time interval (TX) and
- the transponders in which the valency of the first bit of the bit sequence of the identification code is distinguishable from the valency of the check bit are switched to a standby mode until the beginning of a further reporting process and
- the transponders in which the valency of the first bit of the bit sequence of the identification code corresponds with the valency of the check bit transmit the valency of the second bit of the bit sequence of their identification code in a second time interval (TX).

2. Method according to claim 1, **characterised in that** further transponders or exactly one transponder are or is selected by a comparison of further or all bits of the bit sequence of the identification code, **in that** steps 4 to 6 are performed several times and after each performance the number of the time interval (TX) and the number of the bit position of the identification code are increased by one.

## Revendications

1. Procédé de sélection d'un ou de plusieurs transpondeurs parmi une pluralité de transpondeurs par une station de base (BS) au moyen d'une onde électromagnétique, dans lequel :
. on module l'onde électromagnétique par un paquet d'informations (IP), le paquet d'informations (IP) présentant une en-tête (KO) et un segment de données (DA), et
. le segment de données (DA) comprend un mot de données numériques dans une série de bits, dans lequel on associe à chaque fois dans un intervalle de temps (TX) s'étendant entre deux impulsions d'horloge consécutives un bit de la série de bits, et
. on affecte à chaque transpondeur un code d'identification sous la forme d'une série de bits, et
. les transpondeurs sont activés par la station de base par un protocole de connexion et de ce protocole de connexion résulte dans les transpondeurs une indication désignant un premier bit de la série de bits du code d'identification,
**caractérisé en ce que**
. au cours d'une première étape, on transmet la durée d'un intervalle de référence (RI) dans l'en-tête (KO) d'un paquet d'informations envoyé par la station de base,
. au cours d'une deuxième étape, on mémorise dans chaque transpondeur la durée de l'intervalle de référence (RI),
. au cours d'une troisième étape, pour débuter le segment de données (DA) dans un premier intervalle de temps (TX), chaque transpondeur transmet la valeur significative du premier bit du code d'identification,
. au cours d'une quatrième étape, on effectue dans chaque transpondeur à la fin du premier intervalle de temps (TX) une comparaison entre la durée de l'intervalle de référence (RI) et la durée du premier intervalle de temps (TX),
. au cours d'une cinquième étape on affecte à partir du résultat de la comparaison une valeur significative à un bit de vérification,
. au cours d'une sixième étape, les transpondeurs comparent la valeur significative du bit de vérification à la valeur significative du premier bit transmis durant le premier intervalle de temps (TX), et
. on commute dans un mode de veille les transpondeurs pour lesquels la valeur significative du premier bit de la série de bits du code d'identification diffère de la valeur significative du bit de vérification, jusqu'au début d'une connexion ultérieure, et
. les transpondeurs, pour lesquels la valeur significative du premier bit de la série de bits du code d'identification correspond à la valeur significative du bit de vérification, transmettent durant un deuxième intervalle de temps (TX), la valeur significative du deuxième bit de la série de bits de leur code d'identification.

2. Procédé selon la revendication 1, **caractérisé en ce que** l'on sélectionne d'autres transpondeurs ou un transpondeur particulier par comparaison avec d'autres ou avec tous les bits de la série de bits du code d'identification, en répétant plusieurs fois les étapes 4 à 6 et en augmentant d'un après chaque répétition le nombre d'intervalles de temps (TX) et le numéro d'ordre de l'emplacement des bits du code d'identification.
